(19) Europäisches Patentamt
European Patent Office
Office européen des brevets

(11) **EP 2 110 389 A1**

(12) **EUROPÄISCHE PATENTANMELDUNG**

(43) Veröffentlichungstag:
**21.10.2009 Patentblatt 2009/43**

(51) Int Cl.:
***C08F 220/14*** *(2006.01)*    ***C08F 2/44*** *(2006.01)*
***C08K 9/06*** *(2006.01)*

(21) Anmeldenummer: **08007581.5**

(22) Anmeldetag: **18.04.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **Nanoresins AG**
**21502 Geesthacht (DE)**

(72) Erfinder:
• **Langerbeins, Klaus, Dr.**
**21502 Geesthacht (DE)**

• **Kühner, Uwe Dietrich, Dr.**
**20457 Hamburg (DE)**
• **Siol, Werner, Dr.**
**64297 Darmstadt (DE)**

(74) Vertreter: **Glawe, Delfs, Moll**
**Patent- und Rechtsanwälte**
**Rothenbaumchaussee 58**
**20148 Hamburg (DE)**

(54) **Polymerisierbare Masse mit vernetzenden Nanopartikeln**

(57) Gegenstand der Erfindung ist eine polymerisierbare Masse, die enthält
a) Acrylate und/oder Methacrylate, die eine Glasübergangstemperatur Tg von 0°C oder weniger aufweisen,
b) 0,5 bis 70 Gew.-% $SiO_2$-Partikel mit einer mittleren Teilchengröße von 1 bis 150 nm, die polymerisierbare Gruppen auf der Oberfläche aufweisen,

wobei die Masse maximal 2 Gew.-% Vernetzermoleküle enthält.

**Beschreibung**

Die Erfindung betrifft eine polymerisierbare Masse auf der Basis von Acrylaten und/oder Methacrylaten sowie unter Verwendung einer solchen Masse hergestellte polymere Werkstoffe.

Polyacrylate und -methacrylate sind im Stand der Technik seit langem bekannt. Sie werden beispielsweise für die Herstellung von Plexiglas oder sogenannten Acrylatkautschuken verwendet.

Reine vernetzte Polyacrylate weisen nur eine verhältnismäßig geringe Festigkeit auf. Die mechanischen Eigenschaften von Polymeren lassen sich durch Füllstoffe verbessern. Aufgrund der verhältnismäßig leichten Verseifbarkeit von Acrylatestergruppen können bei Polyacrylaten nur wenige Füllstoffe Verwendung finden, beispielsweise Ruß. Dieser beeinträchtigt jedoch die häufig gewünschte Transparenz von Polyacrylaten.

Der Erfindung liegt die Aufgabe zugrunde, eine polymerisierbare Masse der eingangs genannten Art zu schaffen, die vielseitig verwendbar ist und den aus solchen polymerisierbaren Massen herstellbaren Werkstoffen gute mechanische Eigenschaften verleiht.

Gegenstand der Erfindung ist somit eine polymerisierbare Masse, die enthält:

a. Acrylate und/oder Methacrylate, die eine Glasübergangstemperatur $T_g$ von 0°C oder weniger aufweisen,

b. 0,5 bis 70 Gew.-% $SiO_2$-Partikel mit einer mittleren Teilchengröße von 1 bis 150 nm, die polymerisierbare Gruppen auf der Oberfläche aufweisen,

wobei die Masse maximal 2 Gew.-% Vernetzermoleküle enthält.

Die erfindungsgemäße polymerisierbare Masse basiert auf Acrylaten und/oder Methacrylaten. Als Füllstoff enthält sie nanoskalige $SiO_2$ Partikel, die auf ihrer Oberfläche polymerisierbare Gruppen aufweisen. Solche polymerisierbaren Gruppen können beispielsweise durch eine geeignete Silanisierung chemisch an die Oberfläche der $SiO_2$ Partikel angebunden werden. Geeignete Silane sind bevorzugt ausgewählt aus der Gruppe der bestehend aus Organosilanen der Formel $R^1_aSiX_{4-a}$, Organosilanen der Formel $(R^1_3Si)_bNR^1_{3-b}$ und Organosiloxanen der Formel $R^1_nSiO_{(4-n)/2}$, worin jedes $R^1$ unabhängig voneinander ausgewählt ist aus Kohlenwasserstoffresten mit 1 bis 18 Kohlenstoffatomen oder organofunktionellen Kohlenwasserstoffresten mit 1 bis 18 Kohlenstoffatomen oder ein Wasserstoffatom ist, jedes X unabhängig voneinander auswählt eine hydrolysierbare Gruppe ist, a = 0, 1, 2 oder 3, b = 1, 2 oder 3 und n eine Zahl von 2 bis einschließlich 3 ist. Beispiele für hydrolysierbare Gruppen sind Halogen-, Alkoxy-, Alkenoxy-, Acyloxy-, Oximino- und Aminoxygruppen. Beispiele für funktionelle, nicht hydrolysierbare Gruppen sind Vinyl-, Aminopropyl-, Chlorpropyl- Aminoethylaminopropyl-, Glycidyloxypropyl-, Mercaptopropyl- oder Methacryloxypropyl-Gruppen. Geeignet sind beispielsweise Alkoxysilane und Silazane. Beispielhaft genannt seien, 3-Methacryloxypropyltrimethoxysilan, 3-Acryloxypropyltrimethoxysilan, 3-Methacryloxypropyltriethoxysilan, Phenyltrimethoxysilan, Phenyltriethoxysilan, Propyltrimethoxysilan, Propyltriethoxysilan, 3-Glycidyloxypropyltrimethoxysilane, Hexamethyldisiloxan, Divinyltetramethyldisiloxan, Hexamethyldisilazan, Divinyltetramethyldisilazan, γ-Aminopropyltrimethoxysilan, γ-Aminopropylmethyldiethoxysilan, γ-Aminopropyldimethylmethoxysilan, Chlorpropyltrimethoxysilan, Vinylmethyldimethoxysilan, Vinyltrispropenoxysilan, Vinyldimethylbutanonoximsilan, Vinyltrisbutanonoximsilan, Chlortrimethylsilan, Vinyldimethylchlorsilan, Dimethylchlorsilan, Vinylmethylchlorsilan.

Die polymerisierbaren Gruppen auf der Oberfläche der $SiO_2$ Partikel können insbesondere Vinylgruppen, Allylgruppen, Hexenylgruppen, Acryloylgruppen und/oder Methacryloylgruppen umfassen.

Die Erfindung hat erkannt, dass diese oberflächenmodifizierten $SiO_2$ Partikel überraschender Weise bei der radikalischen Polymerisation der polymerisierbaren Masse als Vernetzer wirken können und eine wirksame Vernetzung des ausgehärteten Poly(meth)acrylats herbeiführen. Im Rahmen der Erfindung enthält die polymerisierbare Masse daher keine oder allenfalls eine geringe Menge (maximal 2 Gew.-%) herkömmliche Vernetzermoleküle. Der Begriff Vernetzermoleküle bezeichnet niedermolekulare (bevorzugt monomere) Moleküle mit wenigstens zwei polymerisierbaren Doppelbindungen, die zunächst lineare oder verzweigte makromolekulare Netzwerke zu dreidimensionalen polymeren Netzwerken verknüpfen können. Vernetzer sind definiert in Römpp Chemie-Lexikon, 10. Auflage, Band 6, Seite 4836.

Die Erfindung ermöglicht eine im Vergleich zur herkömmlichen Vernetzermolekülen wesentliche verbesserte Reißdehnung. Beim Einsatz von Vernetzern des Standes der Technik erhält man ein engmaschiges und damit wenig dehnbares Netzwerk. Bei der erfindungsgemäßen polymerisierbaren Masse erhält man durch die eingesetzten oberflächenmodifizierten $SiO_2$ Partikel zwar weniger Netzpunkte, aber eine Mehrzahl von Netzbögen "von Netzpunkt zu Netzpunkt", d.h. von Partikel zu Partikel. Ein solches Netzwerk ist dehnbarer und dennoch fest.

Die Erfindung ermöglicht insbesondere die Herstellung eines dehnbaren und festen Acrylatkautschukes und setzt zu diesem Zweck als Ausgangsstoffe für die Polymerisation Acrylate bzw. Methacrylate mit einer Glasübergangstemperatur $T_g$ von 0° C oder kleiner ein.

Im Rahmen der Erfindung ist die Verwendung von Acrylaten oder von Acrylat-/Methacrylatmischungen mit überwiegendem Acrylatanteil bevorzugt. Acrylate sind insbesondere gut geeignet für die Herstellung sogenannter Acrylatkautschuke, die aufgrund der niedrigen Glasübergangstemperatur (Tg <0°C) bei Raumtemperatur eine kautschukähnliche Elastizität besitzen. Besonders bevorzugt ist im Rahmen der Erfindung zur Herstellung solcher Acrylatkautschuke Butylacrylat.

Der Begriff Glasübergangstemperatur Tg bezeichnet die Glasübergangstemperatur der in der erfindungsgemäßen Masse verwendeten Acrylate bzw. Methacrylate nach deren Polymerisation. Die Glasübergangstemperaturen entsprechend der Homopolymerisate sind bekannt und bspw. aufgelistet in J.Brandrup, E.H. Immergut, Polymer Handbook 1st Ed. J. Wiley, New York, 1975.

Die Glastemperatur eines Mischpolymerisates kann nach der sogenannten Fox-Gleichung berechnet werden (T.G. Fox, Bull. Am. Phys. Soc. (Ser. II], 1, 123 [1956]).

Die Erfindung stellt somit polymerisierbare Massen zur Verfügung, die nach der Aushärtung Werkstoffe mit wesentlich verbesserten mechanischen Eigenschaften darstellen. Eine verbesserte Reißdehnung stellt sich ein durch die verwendeten oberflächenmodifizierenden $SiO_2$ Partikel, ohne dass dazu herkömmliche Vernetzer erforderlich sind.

Die Acrylate bzw. Methacrylate weisen bevorzugt 1 bis 18 C-Atome, weiter vorzugsweise 1 bis 12 C-Atome in der Alkylkette auf. Die Alkylkette kann linear oder verzweigt sein.

Bevorzugte Untergrenzen für die mittlere Teilchengröße der $SiO_2$ Partikel sind 2 nm, 3 nm, 4 nm und 5 nm. Bevorzugte Obergrenzen sind 100 nm, 75 nm, 50 nm, 30 nm, 25 nm und 20 nm.

Die Teilchengröße kann in Lösung mittels dynamischer Lichtstreuung auf einem "Dynamic Light Scattering Particle Size Analyzer LB-550" der Firma Horiba bei einer Konzentration von maximal 10 Gew.-% Partikeln erfolgen, wobei die Dispersion maximal eine dynamische Viskosität von 3 mPas bei 25 °C aufweisen darf. Als Teilchengröße wird der Median (D50-Wert) der Partikelgrößenverteilung angeben.

Im Feststoff kann die Teilchengröße per Transmissionselektronenmikroskopie bestimmt werden. Dazu werden mindestens 100 Partikel ausgemessen und eine Partikelgrößenverteilung gebildet.

Das nanoskalige Siliciumdioxid besteht vorzugsweise zu wenigstens 50 % aus vereinzelten, nicht aggregierten oder agglomerierten Primärpartikeln in der Acrylat- und/oder Methacrylatmatrix. Weitere bevorzugte Untergrenzen sind 70 %, 80 %, 90 %, 95 % und 98 %. Bei diesen Prozentangaben handelt es sich um Gew.-%. Somit stellt die Erfindung bevorzugt eine Dispersion zur Verfügung, die im Wesentlichen frei ist von Aggregaten und/oder Agglomeraten der Siliciumdioxidpartikel (kolloidale Dispersion). Dies verbessert die Verarbeitbarkeit (geringere Viskosität) und die mechanischen Eigenschaften von mit der erfindungsgemäßen Dispersion hergestellten Zwischen- und Endprodukten.

Es ist im Rahmen der Erfindung bevorzugt, dass die Siliciumdioxidpartikel monodispers sind.

Bei einer Variante der Erfindung sind auf der Oberfläche der $SiO_2$ Partikel wenigstens zwei verschiedene polymerisierbare Gruppen angeordnet. Die verschiedenen polymerisierbaren Gruppen können vorzugsweise Methacryloyl-, Acryloyl-, Styryl- oder Itaconylgruppen einerseits und Vinyl-, Allyl-, Alkenyl- oder Crotonylgruppen andererseits umfassen. Weiter können sie insbesondere Acryloyl- und/oder Methacryloylgruppen einerseits und Vinyl-, Hexenyl- und/oder Allylgruppen andererseits umfassen.

Eine solche duale Oberflächenmodifizierung der $SiO_2$ Partikel hat den Vorteil, dass polymerisierbare Gruppen mit unterschiedlicher Reaktivität auf die Teilchenoberfläche aufgebracht werden können. Bei der radikalischen Polymerisation reagieren beispielsweise Acryloyl- bzw. Methacryloylgruppen schneller und sind damit reaktiver als Vinyl- oder insbesondere Allylgruppen. Es ist daher beispielsweise möglich, zunächst bei einer niedrigeren Temperatur von beispielsweise 70°C nur die Methacryloylgruppen auf der Oberfläche der $SiO_2$ Partikel vernetzend reagieren zu lassen und zu einem späteren Zeitpunkt der Polymerisation die Temperatur zu erhöhen, beispielsweise auf 90°C, so dass auch auf der Oberfläche befindliche Allylgruppen reagieren. Alternativ ist es möglich, unterschiedliche und unterschiedlich reaktive Acrylat- bzw. Methacrylatmonomere einzusetzen, die nacheinander zudosiert werden, wobei erst das später zudosierte Monomer mit den Allylgruppen reagiert.

Durch Einsatz zwei unterschiedlicher polymerisierbarer Gruppen auf der Teilchenoberfläche und dem sequentiellen Reagierenlassen mit zwei unterschiedlichen Monomeren ist es möglich, ein Polymer entstehen zu lassen, das sich gegenseitig durchdringend zwei verschiedene Polymernetzwerke enthält.

Zur Herstellung einer solchen dualen Oberflächenmodifizierung können die entsprechenden Silane bzw. Siloxane bei der Silanisierung der Siliciumdioxidpartikel in Mischung oder nacheinander zur Reaktion gebracht werden.

Es ist bevorzugt, dass der Anteil der Acryloyl- und/oder Methacryloylgruppen an den polymerisierbaren Gruppen auf der Oberfläche 95 bis 5% und der Anteil der Vinyl-, Hexenyl- und/oder Allylgruppen an den polymerisierbaren Gruppen auf der Oberfläche 5 bis 95% beträgt.

Die Oberflächenbelegung der $SiO_2$ Teilchen mit polymerisierbaren Gruppen liegt bevorzugt zwischen 0,01 und 6 Gruppen/$nm^2$, weiter vorzugsweise zwischen 0,02 und 4 Gruppen/$nm^2$. Bei kleinen Siliciumdioxidteilchen mit bspw. etwa 4 nm Teilchengröße ist bevorzugt eine Oberflächenbelegung mit polymerisierbaren Gruppen im oberen Bereich der genannten Bereiche vorgesehen, während bei großen $SiO_2$ Teilchen (bspw. Teilchengröße 20 bis 30 nm) bevorzugt eine Oberflächenbelegung mehr an der unteren Grenze vorgesehen ist. Bevorzugt ist es, wenn pro $SiO_2$ Partikel zwischen 10 und 4.000, vorzugsweise 10 und 2.500 polymerisierbare Gruppen an der Oberfläche gebunden sind.

Über die polymerisierbaren Gruppen hinaus können die Partikel auch Gruppen tragen, die nicht in einer Polymerisation reagieren.

Die Oberfläche der Partikel kann für sphärische Partikel aus der Teilchengröße berechnet werden. Für die Berechnung wird der Median der Partikelgrößenverteilung (D50) heran gezogen. Die spezifische Oberfläche ($A_0$) lässt sich dann mit Hilfe der Dichte des Partikels (p) berechnen:

$$A_0 = 6 / (\rho \times D50)$$

Die Dichte von kolloidalem Siliziumdioxid beträgt 2,1 g/cm$^3$.

Die Zahl der reaktiven Gruppen pro Oberflächeneinheit ($n_R^A$) ergibt sich aus dem Quotienten der Zahl reaktiver Gruppen ($n_R^M$) pro Masse dividiert durch die spezifische Oberfläche:

$$n_R = (n_R^M / A_0)$$

Die Zahl reaktiver Gruppen pro Masse $n_R^M$ kann über geeignete analytische Methoden bestimmt werden. Werden Silane des Typs Alkoxy, Acyloxy, Acetoxy, Alkenoxy oder Oximosilane eingesetzt, um die reaktiven Gruppen auf die Oberfläche zu bringen, kann von einer vollständigen Hydrolyse des Silans ausgegangen werden. D.h. alle eingesetzten Gruppen finden sich auf der Oberfläche der Partikel wieder.

Die Bestimmung der Anzahl der polymerisationsfähigen Gruppen auf der Partikeloberfläche kann auch durch NMR Spektroskopie oder mittels DSC (differential scanning calorimetry) erfolgen. Diese Verfahren können insbesondere dann zur Anwendung kommen, wenn geeignete analytische Methoden zur Bestimmung reaktiver Gruppen (bspw. Iodzahlbestimmung bei Vinylgruppen) nicht zur Verfügung stehen. Bei der DSC wird die Polymerisationswärme als Maß für die Zahl der polymerisationsfähigen Gruppen auf der Partikeloberfläche gemessen. Bei dieser DSC Bestimmung wird eine definierte Menge der oberflächenmodifizierten SiO$_2$ Partikel mit einer standardisierten Peroxidlösung versetzt und die Reaktionswärme gemessen. Das Verfahren ist bspw. beschrieben in DE 36 32 215 A1.

Der Anteil der Vernetzermoleküle in der erfindungsgemäßen polymerisierbaren Masse liegt bevorzugt bei maximal 1 Gew.-%, weiter vorzugsweise maximal 0,5 Gew.-%, weiter vorzugsweise maximal 0,2 Gew.-%. Bei einer weiteren bevorzugten Ausführungsform sind keine technisch relevanten Mengen von Vernetzermolekülen in der polymerisierbaren Masse enthalten. Die Vernetzerfunktion wird ausschließlich von den oberflächenmodifizierten SiO$_2$ Partikeln wahrgenommen. Im Rahmen der Erfindung ist es jedoch auch möglich, sehr geringe Mengen bevorzugt von Pfropfvernetzern wie Allylmethacrylat einzusetzen, um das Netzwerk zu modifizieren.

Bei einer weiteren Ausführungsform der Erfindung beträgt der Anteil von Oligomeren und/oder Präpolymeren an der Gesamtmasse der Acrylate- und/oder Methacrylate 20 Gew.-% oder weniger. Oligomere und/oder Präpolymere sind in der Regel nicht und nur im geringen Umfang reaktiv und können nach der Polymerisation als löslicher Anteil im Polymernetzwerk verbleiben und mechanische Eigenschaften verschlechtern.

Wie oben bereits ausgeführt, ist eine Anwendung der Erfindung die Herstellung sogenannter Acrylatkautschuke. Diese weisen erfindungsgemäß besonders gute mechanische Eigenschaften, insbesondere eine hohe Reißdehnung auf. Gleichzeitig sind sie vollständig transparent, da die erfindungsgemäß verwendeten Nanofüllstoffe die Transparenz in keiner Weise beeinträchtigen. Zur Herstellung solcher Acrylatkautschuke weisen die verwendeten Acrylate bzw. Methacrylate eine Glasübergangstemperatur Tg von 0°C oder weniger auf. Der Gehalt an SiO$_2$-Partikeln liegt bevorzugt zwischen 4 bis 50 Gew.-%, vorzugsweise 5 bis 30 Gew.-%, weiter vorzugsweise 8 bis 25 Gew.-%.

Gegenstand der Erfindung ist ferner ein polymerer Werkstoff, erhältlich durch Aushärten einer erfindungsgemäßen polymerisierbaren Masse.

Die erfindungsgemäße polymerisierbare Masse kann in einer bevorzugten Ausführungsform nach der Aushärtung (Polymerisation) eine Reißdehnung von wenigstens 10% bei einer Zugkraft von 0,5 MPa oder mehr und bei einer Temperatur von 50°C über der Glasübergangstemperatur Tg der ausgehärteten Masse aufweisen. Diese Reißdehnung bzw. Bruchdehnung wird analog DIN 53504 / ISO 37 (Die S2) auf einer Zugprüfmaschine der Fa. Zwick gemessen. Bevorzugt ist es, dass sie bei einer Temperatur von 50°C über der Glasübergangstemperatur $T_g$ eine Reißdehnung von wenigstens 20%, vorzugsweise wenigstens 30%, weiter vorzugsweise wenigstens 50%, weiter vorzugsweise wenigstens 100% aufweist.

Die Herstellung silanisierter SiO$_2$ Nanopartikel mit polymerisierbaren Gruppen an der Oberfläche ist im Stand der Technik grundsätzlich bereits bekannt. Bspw. können SiO$_2$ Partikel aus Kieselsolen ausgefällt und anschließend mit Organosilanen wie bspw. Vinylsilanen silanisiert werden. Eine solche Herstellung über Fällungskieselsäuren ist bspw. in EP 0 926 170 B1 beschrieben.

Eine andere Möglichkeit ist bspw. beschrieben in J. Colloid Interface Sci 26:62 (1968). Es handelt sich hier um die sogenannte Stöber-Synthese solcher Nanopartikel.

Ein weiterer Aspekt der Erfindung ist ein Schlagzähmodifier für Polymere, insbesondere Thermoplaste. Die Schlagzähmodifizierung harter, spröder Thermoplaste erfolgt üblicherweise durch die Einlagerung von kleinen Elastomerteilchen mit einer mit den Thermoplasten verträglichen Pfropfhülle. Die schlagzähverbessernde Wirkung der Elastomerteilchen hängt dabei von der Anbindung der Pfropfhülle an die Elastomerteilchen, der Glasübergangstemperatur Tg der Elastomerteilchen, der Größe der Teilchen und natürlich auch von der Zähigkeit der Elastomerteilchen selbst ab.

Der erfindungsgemäße Schlagzähmodifier umfasst Core-Shell-Partikel, deren Kern eine ausgehärtete polymerisierbare Masse gemäß der vorliegenden Erfindung ist. Es handelt sich hier also um ein erfindungsgemäß verstärktes Elastomer. Die Schale des Core-Shell-Partikels umfasst eine auf den Kern aufgepfropfte Acrylat- und/oder Methacrylathülle, die im Wesentlichen frei von $SiO_2$-Partikeln ist und die Elastomerteilchen mit dem entsprechenden Polymer, beispielsweise Thermoplast, kompatibel macht. Die Schale eines solchen Schlagzähmodifiers kann beispielsweise PMMA (Polymethylmethacrylat) umfassen.

Die mittlere Teilchengröße der Core-Shell-Partikel eines erfindungsgemäßen Schlagzähmodifiers liegt bevorzugt zwischen 0,05 und 10 μm vorzugsweise 0,1 bis 8 μm, weiter vorzugsweise 0,2 bis 5 μm, weiter vorzugsweise 0,2 bis 2 μm, weiter vorzugsweise 0,3 bis 1 μm.

Ausführungsbeispiele der Erfindung werden nachfolgend beschrieben.

Zunächst seien die nachfolgend verwendeten Messverfahren beschrieben.

Die Zugfestigkeit, der E-Modul und die Bruchdehnung wurden analog DIN 53504/ISO 37 (Die S2) auf einer Zugprüfmaschine der Fa. Zwick bestimmt. Die Härte nach Shore A wurde analog DIN 53505 gemessen.

Die Viskosität der polymerisierbaren Massen mit vernetzenden Nanopartikeln wurde bei 25°C auf einem Brookfield-Viskosimeter RVDV-II+ mit Spindel 42 bei 100 min$^{-1}$ gemessen.

Beispiel 1

Es werden drei erfindungsgemäße $SiO_2$ Dispersionen in Methylmethacrylat (MMA) bzw. Butylacrylat eingesetzt.

Partikel P1: 50 Gew.-% Nanopartikel in Methylmethacrylat Ein kolloidales Kieselsol (40 Gew.-% $SiO_2$ in Wasser, Teilchengröße (D50) per dynamischer Lichtstreuung: 25 nm, stabilisiert mit NaOH) wurde über einem sauren Ionentauscher (Amberjet 1200H, Rohm&Haas) gerührt, bis ein pH-Wert von 2-3 erreicht war. 400 g des sauren Sols wurden mit 24 g 3-Methacryloxypropyltrimethoxysilan und 3 Stunden gerührt. Die Mischung wurde mit 2000 g Isopropanol versetzt und unter Vakuum destillativ auf 400 g eingeengt. Zu der Mischung wurden 1500 g Methylmethacrylat und 3,2 mg Methoxyhydrochinon gegeben und unter reduziertem Druck solange destilliert, bis eine klare Dispersion mit einem Feststoffgehalt von 50 Gew.-% erhalten wurde.

Partikel P2: 37,5 Gew.-% Nanopartikel in Butylacrylat Ein kolloidales Kieselsol (40 Gew.-% $SiO_2$ in Wasser, Teilchengröße (D50) per dynamischer Lichtstreuung: 25 nm, stabilisiert mit NaOH) wurde über einem sauren Ionentauscher (Amberjet 1200H, Rohm&Haas) gerührt, bis ein pH-Wert von 2-3 erreicht war. 300 g des sauren Sols wurden mit 18 g 3-Methacryloxypropyltrimethoxysilan versetzt und 2 Stunden gerührt. Die Mischung wurde mit 1800 g Isopropanol versetzt und unter Vakuum destillativ auf ca. 350 g eingeengt.

Zu der Mischung wurden 1200 g Butylacrylat und 0,32 g Methoxyhydrochinon (zur Stabilisierung) gegeben und unter reduziertem Druck destilliert, bis das Isopropanol entfernt war. Es wurde eine Dispersion mit einem Feststoffgehalt von 37,5 Gew.-% erhalten.

Partikel P3: 38,8 Gew.-% Nanopartikel in Methylmethacrylat Beispiel 1 wurde wiederholt, nur dass 4,1 mg Methoxyhydrochinon als Stabilisator eingesetzt wurden und das Sol auf einen Feststoffgehalt von 38,8 Gew.-% eingeengt wurde.

P1:  50 Gew.-% Nanopartikel in MMA, stabilisiert mit ca. 10 ppm Methoxyhydrochinon, 3,2 Methacryloylo-xypropyl-gruppen/nm$^2$ auf der Oberfläche

P2  37,5 Gew.-% Nanopartikel in Butylacrylat, stabilisiert mit 1.000 ppm Methoxyhydrochinon, 3,2 Methacryloxypropylgruppen/nm$^2$ auf der Oberfläche

P3  38,8 Gew.-% Nanopartikel in MMA, stabilisiert mit ca. 10 ppm Methoxyhydrochinon, 3,2 Methacryloyloxypropyl-gruppen/nm$^2$ auf der Oberfläche

Vergleichsbeispiel 1

Es wird eine Nanopartikeldispersion in MMA hergestellt, die keine polymerisierbaren Gruppen auf der Oberfläche aufweist

Partikel P0: 38,4 % Nanopartikel in Methylmethacrylat Ein kolloidales Kieselsol (40 Gew.-% $SiO_2$ in Wasser,

Teilchengröße (D50) per dynamischer Lichtstreuung: 25 nm, stabilisiert mit NaOH) wurde über einem sauren Ionentauscher (Amberjet 1200H, Rohm&Haas) gerührt, bis ein pH-Wert von 2-3 erreicht war. 400 g des sauren Sols wurde mit 32 g Propyltrimethoxysilan versetzt und 3 Stunden gerührt. Die Mischung wurde mit 2000 g Isopropanol versetzt und unter Vakuum destillativ auf 400 g eingeengt. Zu der Mischung wurden 1500 g Methylmethacrylat und 4,1 mg Methoxyhydrochinon gegeben und unter reduziertem Druck solange destilliert, bis eine Dispersion mit einem Feststoffgehalt von 38,4 Gew.-% erhalten wurde.

P0 38,4 Gew.-% Nanopartikel in MMA, stabilisiert mit ca. 10 ppm Methoxyhydrochinon, keine Methacryloyloxypropylgruppen auf der Oberfläche Beispiele 2 bis 7

In diesem Beispiel wird ein Gusspolymerisat unter Verwendung erfindungsgemäßer $SiO_2$ Dispersionen hergestellt. Die Außenmaße der Kammer beträgt 150x200 mm. Der Aufbau der Kammer im Querschnitt ist wie folgt:

- Glasplatte
- Kontaktmaterial (PET-Folie oder Teflonplatte)
- Distanzschnur (3 mm)
- Kontaktmaterial (PET-Folie oder Teflonplatte)
- Glasplatte

Als PET-Folie kommt Hostaphan RN, Dicke 350 μm (Mitsubishi Film GmbH) zum Einsatz. Als Teflonplatten werden 2 mm-Platten (Bohländer) verwendet.

Zur Durchführung der Polymerisation wird generell wie folgt vorgegangen:

In Beispiel 2 werden 37,6 Gew.-% Dispersion P1 mit 62,4 Gew.-% Butylacrylat versetzt, in Beispiel 3 24,8 Gew.-% Dispersion P1 mit 75,2 Gew.-% Butylacrylat, und in Beispiel 4 24,8 Gew.-% Dispersion P2 mit 54,5 Gew.-% Butylacrylat und 12,4 Gew.-% MMA. In den nachfolgenden Tabellen ist jeweils der Gesamtgehalt der wesentlichen Bestandteile (Nanopartikel, MMA, Butylacrylat) der Mischung angegeben.

Die Bestandteile dieser Rezepturen (Nanopartikeldispersion, zusätzliche Monomere und Polymerisationsinitiatoren) werden gemischt, bei 20 mbar entgast und beim Raumtemperatur in die Polymerisationskammer gefüllt (Füllmenge 50 g). Anschließend wird im Wasserbad zunächst 4 h bei 75 °C und anschließend 2 h bei 85 °C polymerisiert. Zur Endpolymerisation wird 2 h bei 120 °C im Wärmeschrank getempert.

Die eingesetzten Ausgangsstoffe der Beispiele 2 bis 7 werden in den nachfolgenden Tabellen 1 und 2 angegeben. In jedem Fall werden als Polymerisationsinitiator noch 0,1 g Didodecanoylperoxid und 0,1 g t-Butyl-perbenzoat zugesetzt. Die Gesamtmasse jedes Ansatzes in den nachfolgenden Tabellen beträgt jeweils 50 g.

Tab. 1 Synthese von Acrylkautschukplatten durch Vernetzung von MMA/Butylacrylatgemischen mit Methacryloyloxypropylgruppen tragenden $SiO_2$-Nanopartikeln (alle Angaben in Gew.-%)

| Beispiel | MMA | Butylacrylat | Nanopartikel | Kontaktfolie | Aussehen der Platten |
|---|---|---|---|---|---|
| 2 | 18,8 | 62,4 | 18,8 aus P1 | PET | farblos, |
| 3 | 12,4 | 75,2 | 12,4 aus P1 | PET | klebfrei farblos, weich, nahezu klebfrei |
| 4 | 12,4 | 75,2 | 12,4 aus P2 | Teflon | gelb, trüb, klebfrei |
| 5V | 12,4 | 86,5 + 1,1 TMPTA | - | Teflon | farblos, weich, klebrig |

TMPTA: Trimethylolpropantriacrylat

Tab. 2 Acrylkautschukplatten nach dem Gießverfahren mit 0,1 Gew.% Allylmethacrylat als Pfropfvernetzer

| Beispiel | MMA | Butylacrylat | Nanopartikel | Kontaktfolie | Aussehen der |
|---|---|---|---|---|---|
| 6 | 12,4 | 79,8 [1)] | 20,3 aus P3 | PET | Platten farblos, |

(fortgesetzt)

| Beispiel | MMA | Butylacrylat | Nanopartikel | Kontaktfolie | Aussehen der |
|----------|-----|--------------|--------------|--------------|--------------|
| 7V | 12,4 | 79,8 [1] | 20,3 aus P0 | PET | transparent farblos, transparent [2]) |

1) zusätzlich enthalten: 0,1 Gew.-% Allylmethacrylat
2) Platte nicht unzerstört von der PET-Folie entfernbar

Die Beispiele 5V und 7V sind Vergleichsbeispiele. In Beispiel 5V werden überhaupt keine Nanopartikel eingesetzt, in Beispiel 7V die Nanopartikel P0, die nicht erfindungsgemäß modifiziert sind.

Die hergestellten Gusspolymerisatplatten werden (soweit möglich) aus dem Polymerisationskammern entfernt und die mechanischen Eigenschaften werden geprüft. Die Ergebnisse sind in der nachfolgenden Tabelle 3 dargestellt.

Tab. 3 Charakterisierung hinsichtlich Härte und Zugeigenschaften

| Beisple | Shore A | F-max (MPa) | $\varepsilon$-max (%) | E-Modul | MPa |
|---------|---------|-------------|-----------------------|---------|-----|
| 1 | | | | | |
| 2 | 34 | 2,92 | 231 | 1,21 | |
| 3 | 20 | 1,41 | 287 | 0,27 | |
| 4 | 24 | 0,86 | 178 | 0,34 | |
| 5V | 24 | 0,28 | 82 | | |
| 6 | 16 | 0,99 | 346 | 0,12 | |
| 7V | --- | --- | --- | --- | 1) |

1) Platte nicht von der PET-Folie abtrennbar

Beispiel 8 Herstellung eines Schlagzähmodifiers

Eine organische Phase bestehend aus: 0,222 g Didodecanoylperoxid 20,0 g Butylacrylat 10,0 g P1 wird mit einer Wasserphase aus 0,15 g Statexan K30 (C14-Alkansulfonsäure- Na- Salz) und 26,3 g Wasser versetzt und 10 s mit 20.000 Upm emulgiert (T25 basic ULTRA-TURRAX). Man erhält eine stabile, feinteilige Emulsion (Tröpfchen < 1$\mu$m).

In einem Wittschen Topf: 250 ml, NW 60, mit Glasblattrührer werden 0,05 g Statexan K30 in 118 g Wasser vorgelegt. Nach Zugabe der oben genannten, feinteiligen Emulsion wird unter langsamem Rühren (ca. 100 min$^{-1}$) unter Argon als Schutzgas auf 80°C erwärmt (Badtemperatur). Nach 90 min Rühren bei 80°C wird gekühlt. Man erhält eine koagulatfreie Dispersion: Teilchengröße < 1$\mu$m, Feststoffgehalt 15,5 %.

Durch Abdampfen des Wassers erhält man den Polymerfeststoff. Der so erhaltene, weiche, elastische Feststoff lässt sich in Methylmethacrylat dispergieren. Die Mikropartikel sind vernetzt. Sie können als Schlagzähmodifier Verwendung finden.

**Patentansprüche**

1.   Polymerisierbare Masse, die enthält:

a) Acrylate und/oder Methacrylate, die eine Glasübergangstemperatur Tg von 0°C oder weniger aufweisen,
b) 0,5 bis 70 Gew.-% SiO$_2$-Partikel mit einer mittleren Teilchengröße von 1 bis 150 nm, die polymerisierbare Gruppen auf der Oberfläche aufweisen,

wobei die Masse maximal 2 Gew.-% Vernetzermoleküle enthält.

2.   Polymerisierbare Masse nach Anspruch 1, **dadurch gekennzeichnet, dass** die mittlere Teilchengröße der SiO$_2$-Partikel wenigstens 2 nm, vorzugsweise wenigstens 3 nm, vorzugsweise wenigstens 4 nm, weiter vorzugsweise wenigstens 5 nm beträgt; und dass vorzugsweise die mittlere Teilchengröße der SiO$_2$-Partikel höchstens 100 nm, weiter vorzugsweise höchstens 75 nm, weiter vorzugsweise höchstens 50 nm, weiter vorzugsweise höchstens 30 nm, weiter vorzugsweise höchstens 25 nm, weiter vorzugsweise höchstens 20 nm beträgt.

3.   Polymerisierbare Masse nach Anspruch 1 oder 2, **dadurch gekennzeichnet, dass** die SiO$_2$-Partikel zu wenigstens

50%, vorzugsweise wenigstens 70%, weiter vorzugsweise wenigstens 80%, weiter vorzugsweise wenigstens 90% aus vereinzelten, nicht aggregierten oder agglomerierten Primärpartikeln bestehen.

4. Polymerisierbare Masse nach einem der Ansprüche 1 bis 3, **dadurch gekennzeichnet, dass** das Acrylat Butylacrylat ist.

5. Polymerisierbare Masse nach einem der Ansprüche 1 bis 4, **dadurch gekennzeichnet, dass** die polymerisierbaren Gruppen auf der Oberfläche der $SiO_2$-Partikel Methacryloyl-, Acryloyl, Styryl-, Itaconyl-, Crotonyl-, Vinyl-, Allyl- und/ oder Alkenylgruppen umfassen.

6. Polymerisierbare Masse nach einem der Ansprüche 1 bis 5, **dadurch gekennzeichnet, dass** auf der Oberfläche der $SiO_2$-Partikel wenigstens zwei verschiedene polymerisierbare Gruppen angeordnet sind; wobei die verschiedenen polymerisierbaren Gruppen vorzugsweise Methacryloyl-, Acryloyl-, Styryl- oder Itaconylgruppen einerseits und Vinyl-, Allyl-, Alkenyl- oder Crotonylgruppen andererseits umfassen; und wobei weiter vorzugsweise der Anteil der Methacryloyl-, Acryloyl-, Styryl- oder Itaconylgruppen an den polymerisierbaren Gruppen auf der Oberfläche 95 bis 5% und der Anteil der Vinyl, Allyl-, Alkenyl- oder Crotonylgruppen an den polymerisierbaren Gruppen auf der Oberfläche 5 bis 95% beträgt.

7. Polymerisierbare Masse nach einem der Ansprüche 1 bis 6**, dadurch gekennzeichnet, dass** die Oberfläche der $SiO_2$-Partikel 0,01 bis 6, bevorzugt 0,02 bis 4 polymerisierbare Gruppen pro $nm^2$ aufweist.

8. Polymerisierbare Masse nach einem der Ansprüche 1 bis 7, **dadurch gekennzeichnet, dass** der Anteil der Vernetzermoleküle maximal 1 Gew.-%, vorzugsweise maximal 0,5 Gew.-%, weiter vorzugsweise maximal 0,2 Gew.-% beträgt.

9. Polymerisierbare Masse nach einem der Ansprüche 1 bis 8, **dadurch gekennzeichnet, dass** der Anteil von Oligomeren und/oder Präpolymeren an der Gesamtmasse der Acrylate und/oder Methacrylate 20 Gew.-% oder weniger beträgt.

10. Polymerisierbare Masse nach einem der Ansprüche 1 bis 9**, dadurch gekennzeichnet, dass** der Gehalt an $SiO_2$-Partikeln 4 bis 50 Gew.-%, vorzugsweise 5 bis 30 Gew.-%, weiter vorzugsweise 8 bis 25 Gew.-% beträgt.

11. Polymerer Werkstoff, erhältlich durch Aushärten einer polymerisierbaren Masse nach einem der Ansprüche 1 bis 10.

12. Polymerer Werkstoff nach Anspruch 11, **dadurch gekennzeichnet, dass** der Werkstoff ein Gusspolymerisat oder ein Acrylatkautschuk ist.

13. Polymerer Werkstoff nach Anspruch 11 oder 12, **dadurch gekennzeichnet, dass** er bei einer Temperatur von 50°C über der Glasübergangstemperatur $T_g$ eine Reißdehnung bei einer Zugkraft $F_{max}$ von 0,5 MPa oder mehr von wenigstens 20%, vorzugsweise wenigstens 30%, weiter vorzugsweise wenigstens 50%, weiter vorzugsweise wenigstens 100% aufweist.

14. Schlagzähmodifier für Polymere, **dadurch gekennzeichnet, dass** er Core-Shell-Partikel aufweist, deren Kern eine ausgehärtete polymerisierbare Masse nach einem der Ansprüche 1 bis 10 aufweist und die Schale eine auf den Kern aufgepfropfte Acrylat- und/oder Methacrylathülle aufweist, die im wesentlichen frei ist von $SiO_2$-Partikeln; wobei die Schale vorzugsweise PMMA umfasst.

15. Schlagzähmodifier nach Anspruch 14**, dadurch gekennzeichnet, dass** die mittlere Teilchengröße der Core-Shell-Partikel 0,05 bis 10 $\mu$m, vorzugsweise 0,1 bis 8 $\mu$m, weiter vorzugsweise 0,2 bis 5 $\mu$m, weiter vorzugsweise 0,2 bis 2 $\mu$m, weiter vorzugsweise 0,3 bis 1 $\mu$m beträgt.

**Europäisches Patentamt**

# EUROPÄISCHER RECHERCHENBERICHT

Nummer der Anmeldung

EP 08 00 7581

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 505 230 A (RHONE POULENC CHIMIE [FR]) 23. September 1992 (1992-09-23) | 1-15 | INV. C08F220/14 C08F2/44 C08K9/06 |
| Y | * Beispiel 1 * <br> * Seite 5, Zeile 48 * <br> * Seite 6, Zeile 33 * <br> * Seite 6, Zeile 28 * <br> ----- | 6 | |
| X | WO 98/59388 A (UNIV NORTH CAROLINA [US]; UNIV MICHIGAN [US]; KHAN SAAD A [US]; FEDKIW) 30. Dezember 1998 (1998-12-30) | 1-15 | |
| Y | * Beispiel 5 * <br> ----- | 6 | |
| A | WO 00/73393 A (3M INNOVATIVE PROPERTIES CO [US]) 7. Dezember 2000 (2000-12-07) | 1-15 | |
| Y | * Seite 9, Zeile 14; Beispiel 4 * <br> ----- | 6 | |

**RECHERCHIERTE SACHGEBIETE (IPC)**

C08F

Der vorliegende Recherchenbericht wurde für alle Patentansprüche erstellt

| Recherchenort | Abschlußdatum der Recherche | Prüfer |
|---|---|---|
| Den Haag | 18. September 2008 | Friederich, Pierre |

**EP 2 110 389 A1**

**ANHANG ZUM EUROPÄISCHEN RECHERCHENBERICHT
ÜBER DIE EUROPÄISCHE PATENTANMELDUNG NR.**

EP 08 00 7581

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-09-2008

| Im Recherchenbericht angeführtes Patentdokument | | Datum der Veröffentlichung | Mitglied(er) der Patentfamilie | | Datum der Veröffentlichung |
|---|---|---|---|---|---|
| EP 0505230 | A | 23-09-1992 | FR | 2674251 A1 | 25-09-1992 |
| | | | JP | 2042320 C | 09-04-1996 |
| | | | JP | 5115772 A | 14-05-1993 |
| | | | JP | 7063614 B | 12-07-1995 |
| WO 9859388 | A | 30-12-1998 | AU | 8260498 A | 04-01-1999 |
| | | | EP | 1038330 A1 | 27-09-2000 |
| | | | US | 5965299 A | 12-10-1999 |
| WO 0073393 | A | 07-12-2000 | AU | 4710000 A | 18-12-2000 |
| | | | CN | 1352672 A | 05-06-2002 |
| | | | DE | 60012523 D1 | 02-09-2004 |
| | | | DE | 60012523 T2 | 21-07-2005 |
| | | | EP | 1187881 A1 | 20-03-2002 |
| | | | JP | 2003501511 T | 14-01-2003 |
| | | | US | 6299799 B1 | 09-10-2001 |

EPO FORM P0461

Für nähere Einzelheiten zu diesem Anhang : siehe Amtsblatt des Europäischen Patentamts, Nr.12/82

10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3632215 A1

- EP 0926170 B1

**In der Beschreibung aufgeführte Nicht-Patentliteratur**

- *Römpp Chemie-Lexikon,* vol. 6, 4836
- **J.Brandrup ; E.H. Immergut.** Polymer Handbook. J. Wiley, 1975

- **T.G. Fox.** *Bull. Am. Phys. Soc.,* 1956, vol. 1, 123
- *J. Colloid Interface Sci,* 1968, vol. 26, 62